Europäisches Patentamt

European Patent Office

Office européen des brevets

(11) Veröffentlichungsnummer: **0 021 022**
**B1**

(12) **EUROPÄISCHE PATENTSCHRIFT**

(45) Veröffentlichungstag der Patentschrift: **18.01.84**

(51) Int. Cl.³: **G 01 F 23/10, F 01 M 11/12**

(21) Anmeldenummer: **80102752.5**

(22) Anmeldetag: **19.05.80**

(54) **Einrichtung zur Überwachung von Schmiermitteln im Kraftfahrzeug.**

(30) Priorität: **09.06.79 DE 2923522**

(43) Veröffentlichungstag der Anmeldung:
**07.01.81 Patentblatt 81/1**

(45) Bekanntmachung des Hinweises auf die Patenterteilung:
**18.01.84 Patentblatt 84/3**

(84) Benannte Vertragsstaaten:
**DE FR GB IT**

(56) Entgegenhaltungen:
**EP - A - 0 016 929**
**DE - B - 2 820 924**
**US - A - 4 057 700**
**US - A - 4 066 997**

(73) Patentinhaber: VDO Adolf Schindling AG
Gräfstrasse 103
D-6000 Frankfurt/Main (DE)

(72) Erfinder: Hauschild, Wolfgang
Kastanienhain 29
D-6232 Bad Soden 3 (DE)
Erfinder: Baumgart, Hans Jürgen
Marktplatz 6
D-6231 Schwalbach (DE)

(74) Vertreter: Könekamp, Herbert, Dipl.-Ing.
Sodener Strasse 9
D-6231 Schwalbach (DE)

Courier Press, Leamington Spa, England.

Einrichtung zur Überwachung von Schmiermitteln im Kraftfahrzeug

Die Erfindung betrifft eine Einrichtung zur Überwachung des Vorrates an fließfähigem Schmiermittel im Auffangbehälter eines Kraftfahrzeuges, insbesondere des Ölvorrates im Kurbelgehäuse eines Motors, mit einem mit dem Auffangbehälter kommunizierenden Beruhigungsgefäß, in dem ein niveaubhängig schaltender Schwimmer längsverschiebbar geführt ist und Sperrmittel vorgesehen sind, die den Schwimmer bei Überschreitung eines vorgegebenen Neigungswertes an einer Führung blockkieren.

Mit einer Einrichtung nach der Veröffentlichung EP—A—0 016 929, die einen gemäß Artikel 54(3) EPÜ relevanten Stand der Technik darstellt, wird das Problem gelöst, einen Schmiermittelvorrat sowohl bei Fahrt als auch im Stand zu überwachen, indem durch Fahrzeugbewegung verursachte unbegründete Fehlsignale mechanisch unterdrückt werden. Es hat sich nun gezeigt, daß das im Hinblick auf die Funktionsweise erforderliche Spiel zwischen Führung und Schwimmer einer fertigungstechnisch bevorzugten Ausführungsform nur unter erheblichen Schwierigkeiten genau einstellbar ist.

Bei einer gleichfalls in der EP—A—0 016 929 enthaltenen anderen Version mit zusätzlich erforderlichen und kompliziert montierbaren, schwenkbaren Hebeln im Beruhigungsgefäß ist zwar ein genaueres Spiel zwischen Führung und Schwimmer einstellbar, jedoch ist eine solche Ausführungsform nur mit erheblichem, die danach aufgebauten Produkte verteuernden Fertigungsaufwand zu verwirklichen.

Daher liegt der Erfindung die Aufgabe zugrunde, eine insbesondere gegenüber dem Gegenstand der EP—A—0 016 929 verbesserte, einfach herstellbare und genau arbeitende Einrichtung zur Überwachung von Schmierstoff im Kraftfahrzeug zu schaffen.

Diese Aufgabe wird von einer Einrichtung der eingangs genannten Art dadurch gelöst, daß die Führung des Schwimmers um mindestens zwei im wesentlichen horizontale, nicht parallele Achsen schwenkbar aufgehängt ist.

Durch diese erfindungsgemäße Maßnahme wird erreicht, daß stets eine lotrechte Lage der Führung mit dem Schwimmer vorhanden ist und so ein fertigungstechnisch übliches Spiel zwischen Schwimmer und Führung auftritt. Das Blockieren erfolgt bei dieser Lösung nicht durch das Spiel der Teile zueinander und die Sperrmittel, sondern durch die Verschwenkung der Führung mit dem Schwimmer gegenüber unmittelbar oder mittelbar am Auffangbehälter starr angeordneten Sperrmitteln.

Bei einer besonders zuverlässigen, vorteilhaften Weiterbildung der Erfindung ist die Führung und das Beruhigungsgefäß schwenkbar gegenüber den Sperrmitteln gelagert, um eine kompakte Bauform mit großer Eigenträgheit zu schaffen, die gegen Erschütterungen des Kraftfahrzeuges unempfindlich ist.

Führung und Schwimmer der Einrichtung der Erfindung haben stets eine lotrechte Lage, gleichgültig, ob sie je nach Bedarf vorteilhaft dadurch ausgestaltet sind, daß sie kardanisch, an einer Kugel oder an einem auf Biegung und/oder Torsion beanspruchbaren elastischen Element aufgehängt ist. Welche dieser Lösungen letztendlich zum Tragen kommt, hängt von den jeweiligen Anforderungen an die Lagerung und dem möglichen technischen Aufwand ab, der getrieben werden kann.

Auch die Sperrmittel sind richtungsabhängig an bevorzugte Ausführungsformen anpaßbar, vorteilhaft dadurch, daß die Führung des Schwimmers schwenkbar am Auffangbehälter aufgehängt ist und daß die Sperrmittel sowie das Beruhigungsgefäß starr am Auffangbehälter angeordnet sind.

Günstige Strömungsverhältnisse ergeben sich für eine vorteilhafte Ausführungsform, bei der für starr am Auffangbehälter angeordnete Sperrmittel Durchführungen im Beruhigungsgefäß vorgesehen sind, weil das Öl durch diese Durchführungen schneller zurückfließen kann. Als zweckmäßig hat es sich erwiesen mindestens drei radial eingreifende Finger als Sperrmittel vorzusehen, deren Spitzen auf einem Kreis enden, deren Durchmesser größer als der Durchmesser des Schwimmers ist.

Die Führung ist in einer weiteren vorteilhaften Ausgestaltung als länglicher Hohlkörper mit gleichbleibendem Querschnitt aus nicht magnetisierbarem Material ausstaltbar, in dem Schutzrohrkontakte angeordnet sind, mit denen Schaltpunkte genau und einfach justierbar sind.

Weitere vorteilhafte Ausgestaltungen der Erfindung werden anhand der in der Zeichnung schematisch dargestellten Ausführungsbeispiele näher erläutert. Es zeigen:

Figur 1 im Querschnitt einen Teil einer Ölwanne mit schwenkbarer Führung und starrem Beruhigungsgefäß in Ruhelage,

Figur 2 den Querschnitt von Figur 1 in geneigter Lage,

Figur 3 einen Querschnitt durch den Teil einer Ölwanne mit einem gemeinsam mit der Führung kardanisch aufgehängten Beruhigungsgefäß in Ruhelage,

Figur 4 den Querschnitt von Figur 3 in geneigter Lage,

Figur 5 einen Querschnitt eines Teils einer weiteren Version eines Schalters der Figuren 3 und 4 in Ruhelage und

Figur 6 den Querschnitt der Figur 5 in geneigter Lage.

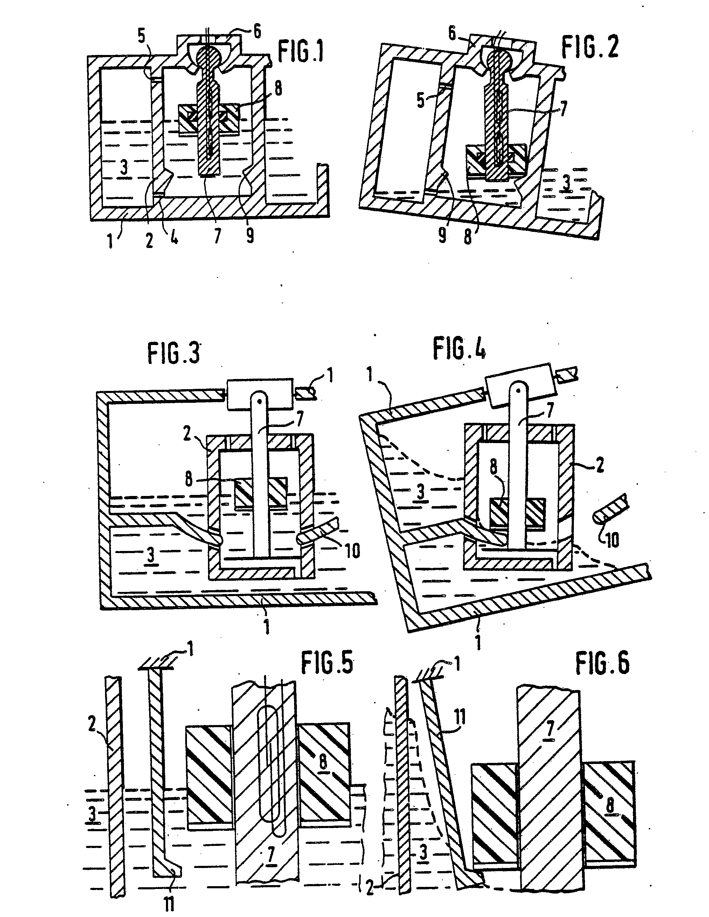

Der in den Figuren 1 und 2 dargestellte Auffangbehälter 1 ist starr mit dem Beruhigungsgefäß 2 verbunden. Das Schmiermittel 3 befindet sich im Auffangbehälter 1 und über Durchtrittsöffnungen 4 auch in dem Beruhigungsgefäß 2 und strebt in beiden Gefäßen stets gleiches Niveau an. Das Beruhigungsgefäß 2 und der Auffangbehälter 1 sind also kommunizierende Gefäße, deren Verbindung dämpfend wirkt, beispielsweise durch Ausbau der Durchtrittsöffnungen 4 zu einem Labyrinth sowie durch eine Belüftungsöffnung 5.

Am Beruhigungsgefäß 2 hängt an einer Lagerschale 6 eine Führung 7 für den Schwimmer 8, der normalerweise vom Schmiermittel 3 getragen wird und niveauabhängig fest in der Führung angeordnete Kontakte schließt oder öffnet.

Die bereits in der EP—A—0 016.929 angesprochenen Probleme bei Bewegung des Auffangbehälters 1 im Kraftfahrzeug, bei dem eine Messung möglichst auch bei Fahrt stattfinden soll, werden mit einem ringförmigen Anschlag 9 im Innenraum des Beruhigungsgefäßes 2 gelöst, auf dem der Schwimmer 8 bei Überschreitung einer vorgegebenen Neigung, beispielsweise fünf Winkelgrade, aufsitzt. Die Sitzfläche des Anschlages 9 ist gegenüber der Innenwand des Beruhigungsgefäßes 2 abgeschrägt, um ein Signal zu erhalten wenn der Schwimmer 8 nach Rückkehr in die lotrechte Lage des Beruhigungsgefäßes 2 frei absinkt, weil nicht mehr genug Öl zurückkehrt. Das Eigengewicht von Führung 7 und Schwimmer 8 sorgt für eine Aufhängung stets in lotrechter Lage. Sie können daher mit besonders enger Toleranz aufeinander abgestimmt werden. Dadurch werden die Schaltstellen der an der Führung befestigten Schutzrohrkontakte besonders genau.

Der in den Figuren 3 und 4 dargestellte Schwimmer 8 befindet sich ebenfalls mit seiner Führung 7 stets in lotrechter Lage, da in diesem Fall das Beruhigungsgefäß 2 einschließlich Führung 7 kardanisch Aufgehängt ist. Die bei dieser Version am Auffangbehälter 1 befestigten Anschläge sind Finger 10, die durch die Seitenwand des Beruhigungsgefäßes 2 eingeführt sind. Die Durchführungsöffnungen der Finger 10 dienen gleichzeitig zum schnelleren Zurückfließen des Schmiermittels, das in an sich bekannter Weise durch ein labyrinthartiges Leitungssystem langsam abfließen soll.

In den Figuren 5 und 6 ist eine weitere Version der Erfindung vergrößert dargestellt, bei der die starr mit dem Auffangbehälter 1 verbundenen Ansätze 11 zum Auffangen des Schwimmers 8 von oben in das Beruhigungsgefäß 2 eingeführt sind. Die im einzelnen nicht gezeichnete Aufhängung kann wie bei den vorhergehenden Darstellungen ausgeführt sein. Weitere besonders preisgünstige ebenfalls nicht dargestellte Aufhängungen mit ineinander greifenden Ösen am starren und am hängenden Teil der Einrichtung oder ein auf Biegung und/oder Torsion belastbares Federsystem als Aufhängung sind denkbar.

## Patentansprüche

1. Einrichtung zur Überwachung des Vorrates an fließfähigem Schmiermittel im Auffangbehälter (1) eines Kraftfahrzeuges, insbesondere des Ölvorrates im Kurbelgehäuse eines Motors, mit einem mit dem Auffangbehälter kommunizierenden Beruhigungsgefäß (2), in dem ein niveauabhängig schaltender Schwimmer (8) längsverschiebbar geführt ist und Sperrmittel (9, 10, 11) vorgesehen sind, die den Schwimmer (8) bei Überschreitung eines vorgegebenen Neigungswertes an (5) einer Führung (7) blockieren, dadurch gekennzeichnet, daß die Führung (7) des Schwimmers (8) schwenkbar um mindestens zwei im wesentlichen horizontale, nicht parallele Achsen aufgehängt ist.

2. Einrichtung nach Anspruch 1, dadurch gekennzeichnet, daß die Führung (7) und das Beruhigungsgefäß (2) schwenkbar aufgehängt ist.

3. Einrichtung nach Anspruch 1 oder 2, dadurch gekennzeichnet, daß die Führung (7) oder die Führung (7) und das Beruhigungsgefäß (2) kardanisch aufgehängt sind.

4. Einrichtung nach Anspruch 1 oder 2, dadurch gekennzeichnet, daß die Führung (7) oder die Führung (7) und das Beruhigungsgefäß (2) gemeinsam an einer Kugel aufgehängt sind.

5. Einrichtung nach Anspruch 1 oder 2, dadurch gekennzeichnet, daß die Führung (7) oder die Führung (7) und das Beruhigungsgefäß (2) an einem auf Biegung und/oder Torsion beanspruchbaren elastischen Element aufgehängt sind.

6. Einrichtung nach einem der Ansprüche 1 oder 3 bis 5, dadurch gekennzeichnet, daß die Führung (7) des Schwimmers (8) schwenkbar am Auffangbehälter (1) aufgehängt ist und daß die Sperrmittel (9) sowie das Beruhigungsgefäß (2) starr am Auffangbehälter (1) angeordnet sind.

7. Einrichtung nach Anspruch 2, dadurch gekennzeichnet, daß für starr am Auffangbehälter (1) angeordnete Sperrmittel (10, 11) Durchführungen am Beruhigungsgefäß (2) vorgesehen sind.

8. Einrichtung nach einem der Ansprüche 1 bis 5 oder 7, dadurch gekennzeichnet, daß mindestens drei radial eingreifende Finger als Sperrmittel (10, 11) vorgesehen sind, deren Spitzen auf einem Kreis enden, dessen Durchmesser größer als der Durchmesser des Schwimmers (8) ist.

9. Einrichtung nach einem der vorhergehenden Ansprüche, dadurch gekennzeichnet, daß die Führung (7) ein länglicher Hohlkörper gleichbleibenden Querschnittes aus nicht magnetisierbarem Material ist, in dem Schutzrohrkontakte angeordnet sind.

## Revendications

1. Dispositif de contrôle de la réserve en agent lubrifiant fluide dans le réservoir collecteur (1) d'un véhicule automobile, en particulier de la réserve d'huile dans le carter étanche d'un moteur, comportant un récipient stabilisateur (2) en communication avec le réservoir collecteur, et dans lequel un flotteur (8) assurant l'enclenchement en fonction du niveau est guidé à mouvements longitudinaux et dans lequel sont prévus des moyens de blocage (9, 10, 11) qui bloquent le flotteur (8) sur son organe de guidage (7) lors du dépassement d'une valeur d'inclinaison · prédéterminée, dispositif caractérisé par le fait que l'organe de guidage (7) du flotteur (8) est suspendu à pivotement autour d'au moins deux axes non parallèles sensiblement horizontaux.

2. Dispositif selon la revendication 1, caractérisé par le fait que l'organe de guidage (7) et le récipient stabilisateur (2) sont suspendus à pivotement.

3. Dispositif selon la revendication 1 ou 2, caractérisé par le fait que l'organe de guidage (7), ou bien l'organe de guidage (7) et le récipient stabilisateur (2) sons suspendus à la Cardan.

4. Dispositif selon la revendication 1 ou 2, caractérisé par le fait que l'organe de guidage (7), ou bien l'organe de guidage (7) et le récipient stabilisateur (2) sont suspendus conjointement à une bille.

5. Dispositif selon la revendication 1 ou 2, caractérisé par le fait que l'organe de guidage (7), ou bien l'organe de guidage (7) et le récipient stabilisateur (2) sont suspendus à un élément élastique pouvant être sollicité à la flexion et/ou à la torsion.

6. Dispositif selon l'une des revendications 1 ou 3 à 5, caractérisé par le fait que l'organe de guidage (7) du flotteur (8) est suspendu à pivotement au réservoir collecteur (1), et par le fait que les moyens de blocage (9) ainsi que le récipient stabilisateur (2) sont disposés rigidement sur le réservoir collecteur (1).

7. Dispositif selon la revendication 2, caractérisé par le fait que des passages traversants sont prévus sur le récipient stabilisateur (2) pour des moyens de blocage (10, 11) disposés rigidement sur le réservoir collecteur (1).

8. Dispositif selon l'une des revendications 1 à 5 ou 7, caractérisé par le fait que, en guise de moyens de blocage (10, 11) sont prévus au moins trois doigts venant en prise radialement dont les pointes s'achèvent sur une circonférence dont le diamère est plus grand que le diamère du flotteur (8).

9. Dispositif selon l'une des revendications précédentes, caractérisé par le fait que l'organe de guidage (7) est un corps creux allongé de section constante en une matière non magnétisable, dans lequel sont disposés des contacts à lames souples.

## Claims

1. Device for monitoring the supply of fluid lubricant stored in a tank (1) of a motor vehicle, more particularly the oil supply in the crankcase of an engine, with a steadying chamber (2) which communicates with the tank and in which a float (8) carrying out a control function in dependence on level is guided in a longitudinally displaceable manner, and blocking means (9, 10, 11) are provided which block the float (8) at its guide (7) when a predetermined inclination value is exceeded, characterised in that the guide (7) of the float (8) is suspended to be pivotable about at least two substantially horizontal non-parallel axes.

2. Device according to claim 1, characterised in that the guide (7) and the steadying chamber (2) are pivotably suspended.

3. Device according to claim 1 or 2, characterised in that the guide (7) or the guide (7) and the steadying chamber (2) are gimbal-suspended.

4. Device according to claim 1 or 2, characterised in that the guide (7) or the guide (7) and the steadying chamber (2) are suspended jointly on a ball element.

5. Device according to claim 1 or 2, characterised in that the guide (7) or the guide (7) and the steadying chamber (2) are suspended on an elastic element which can be subjected to bending and/or torsional stresses.

6. Device according to one of claims 1 or 3 to 5, characterised in that the guide (7) of the float (8) is suspended pivotably on the tank (1), and that the blocking means (9) and also the steadying chamber (2) are arranged rigidly on the tank (1).

7. Device according to claim 2, characterised in that ports are provided in the steadying chamber (2) for blocking means (10, 11) rigidly arranged on the tank (1).

8. Device according to one of claims 1 to 5 or 7, characterised in that at least three fingers entering from radial directions are provided as blocking means (10, 11), the tips of these fingers ending on a circle whose diameter is greater than the diameter of the float (8).

9. Device according to one of the preceding claims, characterised in that the guide (7) is an elongated hollow body of constant cross-section made of non-magnetisable material, in which reed contacts are arranged.

FIG.1

FIG.2

FIG.3

FIG.4

FIG.5

FIG.6